# EUROPEAN PATENT APPLICATION

(11) **EP 1 580 071 A2**
(43) Date of publication of application: **28.09.2005**
(21) Application number: 05006504.4
(22) Date of filing: 24.03.2005
(51) Int. Cl.: B60P 1/36

(54) **Vehicle mounted conveyor for gathering agricultural products spread on the ground**

(30) Priority: 27.03.2004 GB 0406940
(71) Applicant: Garnett, Andrew John, Cheshire WA16 9NE (GB)
(72) Inventor: Garnett, Andrew John, Cheshire WA16 9NE (GB)
(74) Representative: Wood, Graham

(57) **Abstract**

Movement means for a vehicle (102) such as an agricultural vehicle having a cab including conveying sections (118, 120) and collection means (122) for collecting animal feed material from the ground, conveying the material over or to the side of the vehicle (102), and depositing the material into a moveable container (104) situated towards the rear of the vehicle (102), the conveying sections (118, 120) and collection means (122) moving between an in-use position and a storage position for transport on the vehicle (102).

## Description

The invention to which this application relates is a conveying means for use in loading material, typically from the ground into a container.

Although the following description refers almost exclusively to use of the apparatus with respect to an agricultural vehicle, referred to as a tractor, for loading material such as feed, into a container such as a trailer, it will be appreciated by persons skilled in the art that the present invention can be used with other material, for movement of the same to other locations and/or objects.

It is well known to use an elevator or a tractor with a bucket to move silage or other material from the ground or other storage location into a container for transportation and subsequent deposition. Typically the container is a trailer coupled to a tractor. The problem with elevator vehicles is that they are conventionally provided as separate entities and are not suitable for transportation over distance such as from farm to farm as they are slow and heavy in relation to other vehicles on the road and may cause irritation to other road users. As such, if elevators are used, typically one is required for each location which is expensive. An alternative arrangement is to use a second vehicle, such as a tractor, which is used to move the material from the storage location into the container to be towed by the first tractor. The problem with this arrangement is that the requirement for the additional tractor again increases cost in terms of the capital outlay for the tractor and fuel, the removal of the second tractor from performing another task and the need to have a driver for the second tractor.

The aim of the present invention is to provide a means for moving the material from the storage location into a container connected for movement with a vehicle such as a tractor, and minimising the need for additional manpower and/or independent machinery to be provided.

A further aim is to provide a more effective and efficient selectively attachable elevator-mounted movement means for a vehicle, for loading material into a container, such that a second vehicle is not required.

In a first aspect of the invention, there is provided a vehicle including a body, and movement means including conveying sections forming a conveying path for the material from a first location at a front end of said vehicle to at least a second location at the rear of said vehicle, the movement means provided with at least one collection means for collecting an amount of the material at the first or second location, from which the movement means moves said material to the other of the first or second locations along the conveying path and deposits the material, and characterised in that the conveying sections can be moved between a storage or transport position and an in-use position between which positions the relative positions of the conveying sections are altered so as to extend the length of the conveying path for the in-usc position.

In one embodiment the conveying sections and/or collection means are angularly and/or height adjustable with respect to each other and/or the body of the vehicle so as to allow the in-use and transport positions to be achieved and/or allow the position of the collection means to be adjusted in use while ensuring that the conveying path for the material is maintained.

Preferably the at least one collection means comprises any or any combination of conveying sections, belts, rotating drums, augers, fans, or other rotating means, pivotally attached containers and/or vanes at spaced intervals.

Alternatively the collection means includes a bucket device for use in the initial collection of the material.

In one embodiment a container is provided to be coupled to the vehicle and transportable therewith and into which the collected material is deposited. In one embodiment during transport the material in the container is applied from the container onto the surface along which the same is moving.

In one embodiment the collection means is angularly and/or height adjustable at the first or second locations to allow the collection of the material. In one embodiment the collection means remains connected to the movement means. In an alternative embodiment the collection means is demountable from the movement means at the first or second locations.

In an alternative embodiment the movement means are provided as an integral unit and/or convey material in a linear fashion.

In one embodiment the movement means includes one or more containers pivotally attached to the conveyor surface or vanes at spaced intervals such that as the conveyor surface moves the material is collected and retained in position on the conveyor during movement with respect to the vehicle.

The vehicle is typically stationary while the material is conveyed. Slight movements or adjustments to the position of the movement means and/or vehicle may be required to ensure the material continues to be collected.

Typically the movement means operates to allow the forward and reverse movement of the material between the first and second locations.

Typically the first location is a storage location for animal feed material and the second location is a moveable container from which the feed is deposited during movement.

In one embodiment, the movement means are mounted to be positioned above the vehicle body. In another embodiment the movement means arc mounted and/or located at one side of the vehicle body. The movement means are thus transportable on the vehicle and as part of the same. Preferably when in the transport position the conveying sections are mounted to the side or above the cab body ensuring that the visibility from the cab is not restricted and thereby allowing the vehicle to be driven in a normal manner and at normal speeds.

In a preferred embodiment the movement means are positioned, at least in use, such that there is an incline from the position at the first location at which the movement means can be positioned at or close to the surface, to the position at the second location where the movement means is at a level above the top level of the container.

In one embodiment the height of the movement means at the first location can be adjusted so as to allow the effective collection of a quantity of the material by the collection means.

The material can thus be scooped from the storage location by the collection means, transported over the vehicle by the movement means, and the material released into the moveable container.

In one embodiment the movement means and/or collection means is provided with drive means independently of the vehicle or coupled to the drive means for the vehicle so as to power movement of the movement means and/or collection means to enable material to be conveyed between the first and second locations.

Typically, the movement and/or operation of the movement means can be controlled by a person positioned in a cab of the vehicle. Preferably the person can remain in the cab during use of the movement means to control the same and also during transport of the vehicle between locations for storage or use to control the transport movement. This allows the vehicle to be used in a normal manner and does not require the purchase of additional machinery or equipment as the vehicle can preferably be used for other agricultural purposes.

In accordance with a second aspect of the invention, there is provided an agricultural vehicle including movement means for conveying material from a first location at a first end of said vehicle to at least a second location with respect to the vehicle, said movement means includes one or more conveying sections provided with vanes or scoops for collecting and moving an amount of the material at the first location, moving said material to the second location and depositing the material into a container, characterised in that said moving sections can be moved between an in-use position for conveying material, and a transport position where the moving sections are stored so as not to inhibit movement of the vehicle.

In a third aspect of the invention, there is provided an agricultural vehicle including a body, and movement means including conveying sections forming a conveying path for the material from a first location at a front end of said vehicle to at least a second location at the rear of said vehicle, the movement means provided with at least one collection means for collecting an amount of the material at the first or second location, from which the movement means moves said material to the other of the first or second locations along the conveying path and deposits the material, and characterised in that the conveying sections can be relatively moved to form a conveyor path over the body between the first and second locations.

In a fourth aspect of the invention, there is provided a conveying apparatus for a vehicle, including movement means for conveying material from a first location at a first end of said vehicle to at least a second location with respect to the vehicle, mounting means for detachably mounting the movement means to the vehicle, said movement means includes one or more conveying sections provided with vanes or scoops for collecting and moving an amount of the material at the first location, moving said material to the second location and depositing the material into a container, characterised in that said moving sections can be moved between an in-use position for conveying material, and a transport position where the moving sections are stored so as not to inhibit movement of the vehicle.

This invention therefore allows any vehicle to be adapted for the purpose of moving material from a storage location to a transport container, thereby avoiding the need for a second vehicle and the associated labour.

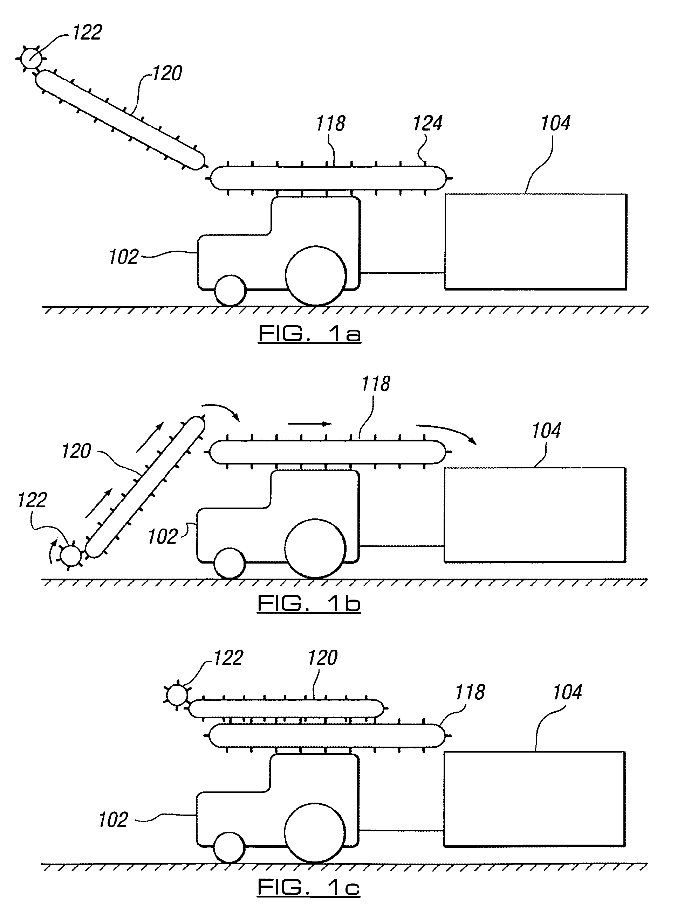

Specific embodiments of the invention are now described wherein:-
Figure 1 illustrates an embodiment of the invention in (c) a storage or transport position, (b) an in-use position and (a) an intermediate position,between storage and in-use positions.

With reference to Figures 1a-c, an embodiment of the invention is illustrated including movement means in the form of conveying sections 118, 120, and collection means 122, mounted on an agricultural vehicle such as a tractor 102 connected to a container 104 such as a trailer/mixer wagon.

The conveying apparatus can also be mounted directly on any suitable vehicle such as the mixer wagon of the vehicle, either permanently or alternatively the apparatus can be demountable and stored separately. The first conveying section 118 is mounted on the tractor 102, with a second conveying section 120 mounted on or near the first conveying section 118 so as to allow transfer of material between the same. A rotating drum 122 is mounted on or near the second conveying section 120. The conveying sections 118, 120 and the rotating drum 122 are provided with ridges or vanes 124 to capture material therebetween.

The conveying sections 118, 120 and collection means 122 can be hydraulically controlled to allow the angle and height of the conveying sections and collection means to be adjusted in position relative to each other and the tractor 102. This control allows the position of the collection means to be adjusted for collecting material continuously from the ground without having to move the tractor.

Thus the rotating drum 122 and conveying section 120 adjacent thereto can be operated at floor level and/or raised and lowered as appropriate to access and gather the material to be carried by the conveying sections 118, 120.

Referring to Figure 1b, the rotating drum 122 at the front of the device rotates thereby removing material that it contacts from the clamp face or from the floor, and transferring the material to the second conveying section 120 which propels the material to the trailer/mixer wagon 104 via the first conveying section 118. The arrows indicate the direction of movement of the material as it is transferred.

When not in use, the device may be stored in a transport or storage position as indicated by Figure 1c on top of the tractor 102 to minimise encumbrance to the same. Referring to Figures 1a & 1c, the conveying sections 118, 120 and/or collection means 122 may slide over cach other or fold up to lie substantially on top of one another to help minimise the movement restriction to the tractor 102, and provide the driver of the vehicle with a clear view thereby allowing the vehicle to be driven in a normal manner and at normal speeds.

It will be appreciated by persons skilled in the art that the present invention also includes further additional modifications made to the device which does not effect the overall functioning of the device.

## Claims

1. A vehicle (102) including a body, and movement means including conveying sections (118, 120) forming a conveying path for the material from a first location at a front end of said vehicle to at least a second location at the rear of said vehicle, the movement means provided with at least one collection means (122) for collecting an amount of the material at the first or second location, from which the movement means moves said material to the other of the first or second locations along the conveying path and deposits the material, and **characterised in that** the conveying sections (118, 120) can be moved between a storage or transport position and an in-use position between which positions the relative positions of the conveying sections (118, 120) are altered so as to extend the length of the conveying path for the in-use position.

2. A vehicle according to claim 1 **characterised in that** the conveying sections (118, 120) and/or collection means (122) are angularly and/or height adjustable with respect to each other and/or the body of the vehicle (102).

3. A vehicle according to claim 1 **characterised in that** the at least one collection means (122) comprises any or any combination of conveying sections, belts, rotating drums, augers, fans, pivotally attached containers and/or vanes at spaced intervals.

4. A vehicle according to claim 1 **characterised in that** the movement means are transportable on the vehicle (102).

5. A vehicle according to claim 1 **characterised in that** the conveying sections (118, 120) are positioned to the side or above the body of the vehicle (102) when in the transport position to ensure a driver's view is not restricted.

6. A vehicle according to claim 1 **characterised in that** the vehicle (102) is stationary while the material is conveyed.

7. A vehicle according to claim 1 **characterised in that** the movement means operates to allow the forward and reverse movement of the material between the first and at least second locations.

8. A vehicle according to claim 1 **characterised in that** the first location is a storage location for animal feed material.

9. A vehicle according to claim 1 **characterised in that** the second location is a moveable container (104).

10. A vehicle according to claim 1 **characterised in that** the movement means are positioned to move material over the body of the vehicle (102).

11. A vehicle according to claim 1 **characterised in that** the movement means are positioned at one side of the body of the vehicle (102).

12. A vehicle according to claim 1 **characterised in that** the movement means defines a linear path along which the at least one collection means (122) is provided to travel.

13. A vehicle according to claim 1 **characterised in that** the movement means can be inclined from a first position at the first location to a second position at the second location.

14. A vehicle according to claim 1 **characterised in that** the location of the first position and/or second position are selectively adjustable.

15. A vehicle according to claim 1 **characterised in that** the first position is located at or close to the vehicle supporting surface.

16. A vehicle according to claim 1 **characterised in that** the second position is located above the top level of a container.

17. A vehicle according to claim 1 **characterised in that** the movement means are provided with drive means independently of the vehicle (102).

18. A vehicle according to claim 1 **characterised in that** the movement means are provided with drive means coupled to the drive means for the vehicle (102).

19. A vehicle according to claim 1 **characterised in that** the movement and/or operation of the movement means is controlled by a person positioned in a cab of the vehicle (102).

20. A vehicle according to claim 19 **characterised in that** the person can remain in the cab during use of the movement means to control the same and also during transport of the vehicle (102) between locations for storage or use to control the transport movement.

21. A vehicle according to any of the preceding claims **characterised in that** the vehicle is an agricultural vehicle.

22. An agricultural vehicle including movement means for conveying material from a first location at a first end of said vehicle to at least a second location with respect to the vehicle, said movement means includes one or more conveying sections (118, 120) provided with vanes (124) or scoops for collecting and moving an amount of the material at the first location, moving said material to the second location and depositing the material into a container (104), **characterised in that** said moving sections can be moved between an in-use position for conveying material, and a transport position where the moving sections are stored so as not to inhibit movement of the vehicle.

23. An agricultural vehicle including a body, and movement means including conveying sections (118, 120) forming a conveying path for the material from a first location at a front end of said vehicle to at least a second location at the rear of said vehicle, the movement means provided with at least one collection means (122) for collecting an amount of the material at the first or second location, from which the movement means moves said material to the other of the first or second locations along the conveying path and deposits the material, and **characterised in that** the conveying sections (118, 120) can be relatively moved to form a conveyor path over the body between the first and second locations.

24. A conveying apparatus for a vehicle, including movement means for conveying material from a first location at a first end of said vehicle to at least a second location with respect to the vehicle, mounting means for detachably mounting the movement means to the vehicle, the movement means provided with at least one collection means (122) for collecting an amount of the material at the first or second location, from which the movement means moves said material to the other of the first or second locations and deposits the material, **characterised in that** said movement means can be moved between an in-use position for conveying material, and a transport position where the movement means are stored so as not to inhibit movement of the vehicle.
